# EUROPÄISCHE PATENTANMELDUNG

(11) **EP 4 614 461 A1**
(43) Veröffentlichungstag der Anmeldung: **10.09.2025**
(21) Anmeldenummer: 25158629.3
(22) Anmeldetag: 18.02.2025
(51) Int. Cl.: G06V 20/40, G06V 40/16, G06V 40/18, G06V 40/20

(54) **VERFAHREN, VORRICHTUNG UND SYSTEM ZUM BESTIMMEN EINES BILDS VON DEM GESICHT EINER PERSON MIT GEÖFFNETEN AUGEN, UND EIN ENTSPRECHENDES COMPUTERPROGRAMMPRODUKT**

(30) Priorität: 04.03.2024 DE 102024106137
(71) Anmelder: Bundesdruckerei GmbH, 10969 Berlin (DE)
(72) Erfinder: PETERS, Dr. Florian, Berlin (DE); SAUER, Tatjana, Berlin (DE)
(74) Vertreter: Bittner, Thomas L.

(57) **Zusammenfassung**

Computer-implementiertes Verfahren zum Bestimmen eines Bilds von dem Gesicht einer Person mit geöffneten Augen, umfassend Empfangen eines ersten Videostreams mit mehreren ersten Bildern von dem Gesicht der Person; für jedes der ersten Bilder, Ermitteln der Augen des Gesichts in dem jeweiligen ersten Bild, und Ermitteln, für jedes Auge, einer Lidstellung in dem jeweiligen ersten Bild; Bestimmen eines personenspezifischen Lidhubbereichs anhand der für die ersten Bilder ermittelten Lidstellungen der Augen; Empfangen eines zweiten Videostreams mit mehreren zweiten Bildern von dem Gesicht der Person; für jedes der zweiten Bilder, Ermitteln der Augen des Gesichts in dem jeweiligen zweiten Bild, und Ermitteln, für jedes Auge, einer Lidstellung in dem jeweiligen zweiten Bild; und Auswählen von mindestens einem zweiten Bild in dem mindestens ein Auge eine Lidstellung oberhalb eines Grenzwerts in dem personenspezifischen Lidhubbereich aufweist.

## Beschreibung

Die Erfindung betrifft ein Verfahren, eine Vorrichtung und ein System zum Bestimmen eines Bilds von dem Gesicht einer Person mit geöffneten Augen, und ein entsprechendes Computerprogrammprodukt.

### Hintergrund

Gesichtsbilder werden zur Authentifizierung einer Person für Sicherheitsdokuments, beispielsweise als Passbilder oder in Ausweisdokumenten verwendet. Insbesondere werden Gesichtsbilder als biometrische Daten in elektronischen Pässen hinterlegt. In einem solchen Gesichtsbild muss das darin enthaltene Gesicht bestimmten vorgegebenen biometrischen Anforderungen genügen. Insbesondere werden bei Verwendung eines solchen Gesichtsbilds hohe Anforderungen an die Ausrichtung des Gesichts, die Erkennbarkeit bestimmter Gesichtsmerkmale sowie der Mimik gestellt.

Solche Gesichtsbilder werden beispielweise durch zur Aufnahme speziell geschulter Personen, wie Fotografen oder Sachbearbeiter aufgenommen. Die Person ist für gewöhnlich geschult, zu erkennen, ob ein Gesichtsbild den gegebenen Anforderungen genügt und kann gegebenenfalls nachträglich Änderungen durchführen oder kann ein neues Gesichtsbild aufnehmen.

In der letzten Zeit geht die Entwicklung dahin, dass sich Personen eigenständig authentifizieren können oder Gesichtsbilder für Ausweisdokumente und Passbilder eigenständig aufnehmen können. Dazu ist die Anwesenheit einer geschulten Person nicht mehr erforderlich. Allerdings muss weiterhin gewährleistet werden, dass das Gesichtsbild den vorgegebenen Anforderungen genügt.

Die Aufnahme eine Gesichtsbild kann beispielsweise in einer Aufnahmeeinrichtung insbesondere sogenannten Live-Enrolment System durchgeführt werden, in dem der Nutzer eigenständig ein Bild von seinem Gesicht mittels einer Bildaufnahmeeinrichtung aufnehmen kann.

In der Aufnahmeeinrichtung werden häufig mehrere Bilder in Form eines Videostreams von dem Gesicht einer Person mittels der Bildaufnahmeeinrichtung aufgenommen. In der Aufnahmeeinrichtung wird dann ein Gesichtsbild durch einen Algorithmus, insbesondere einen trainierten Algorithmus wie einer künstlichen Intelligenz, basierend auf den zu erfüllenden Anforderungen ausgewählt. Für die Auswahl eines Gesichtsbilds wird unter anderem durch den Algorithmus die Mimik und darin insbesondere die Augen geprüft.

Wenn ein Gesichtsbild die vorgegebenen Anforderungen erfüllt, wird das entsprechende Gesichtsbild ausgewählt und zur weiteren Verwendung in einem Authentifizierungsprozess oder Anwendung in einem Sicherheitsdokument weitergeleitet.

In der Praxis hat es sich allerdings gezeigt, dass die in den so ausgewählten Gesichtsbildern dargestellten Gesichter häufig nicht den vorgegebenen Anforderungen genügen. So weisen die Gesichter der Personen in den ausgewählten Gesichtsbildern häufig zumindest teilweise geschlossene Augen auf.

In bisherigen Ansätzen wurde versucht die Gesichtsbildaufnahme so zu steuern, dass die Person während der Aufnahme der Gesichtsbilder die Augen möglichst durchgehend öffnet. Allerdings haben sich diese Ansätze als zweckmäßig, aber nicht ausreichend erwiesen.

Dadurch können Qualitätsprobleme bei der Verwendung der Bilder von dem Gesicht einer Person für die Authentifizierung oder Hinterlegung in einem Sicherheitsdokument auftreten.

### Zusammenfassung

Vor diesem Hintergrund ist es eine Aufgabe der Erfindung, verbesserte Technologien zum Aufnehmen eines Bilds von dem Gesicht einer Person bereitzustellen, welches die Anforderungen zur Verwendung in einem Sicherheitsdokument oder zur Authentifikation erfüllt.

Zur Lösung der Aufgabe ist ein Verfahren zum Bestimmen eines Bilds von dem Gesicht einer Person mit geöffneten Augen nach dem unabhängigen Anspruch 1 bereitgestellt. Weiterhin wird zur Lösung der Aufgabe eine Vorrichtung und ein System zum Bestimmen eines Bilds von dem Gesicht einer Person mit geöffneten Augen sowie ein entsprechendes Computerprogrammprodukt bereitgestellt.

Das erfindungsgemäße Verfahren zum Bestimmen eines Bilds von dem Gesicht einer Person mit geöffneten Augen umfasst: Empfangen eines ersten Videostreams mit mehreren ersten Bildern von dem Gesicht der Person; Für jedes der ersten Bilder, Ermitteln der Augen des Gesichts in dem jeweiligen ersten Bild, und Ermitteln, für jedes Auge, einer Lidstellung in dem jeweiligen ersten Bild; Bestimmen eines personenspezifischen Lidhubbereichs anhand der für die ersten Bilder ermittelten Lidstellungen der Augen; Empfangen eines zweiten Videostreams mit mehreren zweiten Bildern von dem Gesicht der Person; Für jedes der zweiten Bilder, Ermitteln der Augen des Gesichts in dem jeweiligen zweiten Bild, und Ermitteln, für jedes Auge, einer Lidstellung in dem jeweiligen zweiten Bild; und Auswählen von mindestens einem zweiten Bilds in dem mindestens ein Auge eine Lidstellung oberhalb eines Grenzwerts in dem personenspezifischen Lidhubbereich aufweist.

Das erfindungsgemäße Verfahren geht auf die Erkenntnis der Erfinder zurück, dass die Algorithmen zur Auswahl eines Bilds von dem Gesicht einer Person anhand von vielen Beispielbildern von den Gesichtern unterschiedlicher Personen trainiert werden, die Augen allerdings für jede Person ein höchst individuelles Merkmal sind, wodurch die trainierten Algorithmen häufig den Zustand der Augen einer spezifischen Person ungenau erkennen. Das kann dazu führen, dass durch den herkömmlich trainierten Algorithmus ein Gesichtsbild mit vermeintlich geöffneten Lidern bestimmt wird, der tatsächliche Zustand der Lider allerdings nicht dem vermeintlichen Zustand entspricht. Dadurch weisen Gesichter in den von dem herkömmlichen Algorithmus ausgewählten Bilder häufig zumindest teilweise geschlossene Augen auf.

Das erfindungsgemäße Verfahren basiert darauf, dass zwei Videostreams mit Bilden von dem Gesicht der Person zu unterschiedlichen Zeiten aufgenommen werden. Ein Videostream ist für gewöhnlich eine zeitliche Abfolge von aufeinanderfolgend aufgenommenen Bildern.

Der erste Videostream kann zu einer Zeit aufgenommen werden, in der die Person nicht mit der Aufnahme von Bildern zur weiteren Verarbeitung rechnet. Beispielsweise kann die Person in dieser Zeit Vorkehrungen für die eigentliche Bildaufnahme treffen. In dieser Zeit führt die Person eine natürliche Abfolge von Bewegungen durch, wie häufiges Blinzeln mit den Lidern. Das bedeutet, dass die Person während der Aufnahme des ersten Videostreams eine Vielzahl von Lidbewegungen durchführt, d.h. die Augen häufig öffnet und schließt. Dem ersten Videostream liegen damit eine Vielzahl von Bildern von dem Gesicht der Person zugrunde, in denen die Augen der Person verschiedene Lidstellungen aufweisen. Damit kann eine große Bandbreite an Lidstellungen in dem ersten Videostream abgebildet werden.

Für jedes der ersten Bilder werden zunächst die Augen in dem Gesicht ermittelt. Das Ermitteln der Augen kann durch einen herkömmlichen mit unterschiedlichen Gesichtsbildern trainierten Algorithmus durchgeführt werden. Mit Hilfe eines solchen herkömmlichen Algorithmus wird dann für jedes Auge eine Lidstellung ermittelt. Einer Lidstellung kann beispielsweise ein Wert innerhalb eines durch den herkömmlichen Algorithmus vorgebebenen zugeordnet werden. So entspricht beispielsweise ein geschlossenes Lid dem Wert 0 und ein geöffnetes Lid dem Wert 1. Die Werte zwischen 0 und 1 skalieren entsprechen mit der Lidstellung zwischen einem geöffneten Auge und einem geschlossenen Auge.

Die Augen können beispielsweise mittels Facemesh, Adnet oder Dlib ermittelt werden. Die Lidstellung kann beispielsweise anhand eines auf trainierten Daten basierenden Datensatzes ermittelt werden. Beispielsweise werden synthetisch erzeugte Augen sowohl mit einer geöffneten Lidstellung als auch mit einer geschlossenen Lidstellung sowie Lidstellungen dazwischen erzeugt und die entsprechende Lidstellung annotiert. Das Training einer Lidstellung mit analogem Ausgang zwischen 0 und 1 kann beispielsweise mittels eines tensorflow Modells auf Basis von synthetischen GAN Daten erfolgen.

Aus den so ermittelten Lidstellungen der Augen in den ersten Bildern kann dann ein personenspezifischer Lidhubbereich bestimmt werden. Der personenspezifische Lidhubbereich gibt an, bei welchem Wert in dem durch den trainierten Algorithmus vorgegebenen Hubbereich die spezifische Person geschlossene Lider aufweist und bei welchem Wert in dem durch den trainierten Algorithmus vergebenen Lidhubbereich die spezifische Person geöffnete Lider aufweist.

Der zweite Videostream wird anschließend zu einer Zeit aufgenommen, in der die Person damit rechnet, dass Bilder von deren Gesicht zur weiteren Verwendung während einer Authentifizierung oder Anwendung in einem Sicherheitsdokument aufgenommen werden. Die Person kann beispielsweise über die anschließende Bildaufnahme in den zweiten Videostream mittels eines Hinweises informiert werden. Für jedes der zweiten Bilder werden die Augen ermittelt und für jedes Auge wird eine Lidstellung ermittelt. Der Lidstellung kann ein Wert innerhalb des durch den trainierten Algorithmus vergebenen Lidhubbereichs zugeordnet werden. Für jedes Auge in den zweiten Bildern wird ein Vergleich mit einem Grenzwert in dem zuvor bestimmten nutzerspezifischen Lidhubbereich. Wenn der Wert Oberhalb des Grenzwertes in den personenspezifischen Lidhubbereich liegt, kann festgestellt werden, dass die Augen geöffnet sind. Dadurch kann mindestens ein zweites Bilds ausgewählt werden, in dem mindestens ein Auge geöffnet ist.

Somit wird die eingangs genannte Aufgabe gelöst und es kann mindestens ein Bild aus den zweiten Bildern bestimmt werden, bei dem die Person geöffnete Augen aufweist.

Der erste und der zweite Videostream können von der Bildaufnahmeeinrichtung von dem Computer empfangen werden. Vorzugsweise können der erste Videostream und der zweite Videostream in einer zeitlichen Abfolge empfangen werden, wobei der erste Videostream vor dem zweiten Videostream empfangen wird.

Im Folgenden werden weitere bevorzugte Aspekte der Erfindung beschrieben.

In einem Aspekt wurde der erste Videostream in einem Zeitinterwall vor dem zweiten Videostream aufgenommen. Diese Information ist beispielweise in den Metadaten zu den entsprechenden Bildern hinterlegt.

Die Erfinder haben herausgefunden, dass sich die Person insbesondere nach einer Aufforderung vor der Aufnahme der Gesichtsbilder zur weiteren Verwendung häufig auf die anstehende Aufnahme der Bilder vorbereitet. Beispielsweise richtet die Person in dieser Zeit ihr Aussehen, wie etwa der Haare oder der Kleidung. Dabei werden häufig besonders natürliche Bewegungsabfolgen durch die Person durchgeführt, mit natürlichen Lidschlägen. Somit weisen die ersten Bilder in dem ersten Videostream eine Anzahl von natürlichen Lidstellung der Augen auf, die besonders repräsentativ für die spezifische Person sind. Damit kann ein besonders repräsentative Bandbreite des personenspezifischen Lidhubbereichs für die Person ermittelt werden. Außerdem ist diese Vorgehen besonders vorteilhaft bei der Aufnahme in einem Live Enrolment System.

In einem Aspekt sind der erste Videostream und der zweite Videostream Segmente eines durchgehenden Videostreams und der erste Videostream ist zeitlich vor dem zweiten Videostream in dem durchgehenden Videostreams angeordnet.

Der durchgehende Videostream kann durchgehend während des Richtens der Person für die eigentliche Aufnahme und während der eigentlichen Aufnahme der Bilder zur weiteren Verwendung aufgenommen werden. Dementsprechend umfasst der durchgehende Videostream den ersten, früheren, Videostream, der Bilder während des Richtens umfasst, und den zweiten, späteren Videostream, der die Bilder der Aufnahme für die weitere Verwendung umfasst. Ein solcher durchgehende Videostream ist besonders vorteilhaft in der Anwendung in einem bei Life Enrolment System.

In einem weiteren Aspekt umfasst das Auswählen von mindestens einem zweiten Bild: Auswählen von mindestens einem zweiten Bild, bei dem beide Augen eine Lidstellung oberhalb des Grenzwerts in dem personenspezifischen Bereich aufweisen.

Dadurch kann ermittelt werden, dass beide Augen in dem Gesicht geöffnet sind.

In einem weiteren Aspekt das Ermitteln der Lidstellung mittels eines trainierten Algorithmus durchgeführt wird und die Lidstellung der Augen in den ersten Bildern ein Wert in Bezug eines durch den trainierten Algorithmus vorgegebenen Lidhubbereichs ist.

Ein Lidstellung innerhalb eines Auges wird über einen herkömmlichen trainierten Algorithmus bestimmt. Ein solcher Algorithmus wird anhand von Einzelbildern von den Gesichtern verschiedenen Personen trainiert. Auf Basis der Einzelbilder kann für ein Auge ein Lidhubbereich des Lids in dem Auge festgelegt werden. Der Lidhubbereich in dem herkömmlichen Algorithmus wird somit gebildet aus den Lidstellungen in den Einzelbildern, die zum Trainieren des Algorithmus verwendet werden. Dadurch gibt der Lidhubbereich in dem Algorithmus einen durchschnittlichen Bereich zwischen einer geschlossenen Lidstellung und einer geöffneten Lidstellung an. Einer Lidstellung kann durch den Algorithmus ein Wert zugeordnet werden. Der personenspezifische Lidhubbereich wird in Bezug zu dem durch den trainierten Algorithmus vorgegebenen Bereich bestimmt. Somit dient der durch den Algorithmus vorgegebene Lidhubbereich als Referenz. Dadurch ist ein eigenständiges Trainieren des Algorithmus nicht notwendig und es kann auf bestehende Datensätze zurückgegriffen werden.

In einem Aspekt ist ein minimaler Wert des personenspezifischen Lidhubbereichs ein Wert, der einer durch den trainierten Algorithmus bestimmten minimalen Lidstellung der Augen in den ersten Bildern entspricht und ein maximaler Wert des personenspezifischen Lidhubbereichs ist ein Wert, der einer durch den trainierten Algorithmus bestimmten maximalen Lidstellung der Augen in den ersten Bildern entspricht.

Die minimale Lidstellung kann einem geschlossenen Lid entsprechen. Die maximale Lidstellung kann einer geöffneten Lidstellung entsprechen. Zur Bestimmung des personenspezifischen Lidhubbereichs werden die in den ersten Bildern bestimmten Lidstellungen ausgewertet. Eine in den ersten Bildern durch den Algorithmus bestimmte minimale Lidstellung entspricht einer unteren Grenze des personenspezifischen Lidhubbereichs. Eine in den ersten Bilder durch den Algorithmus bestimmte maximale Lidstellung entspricht einer oberen Grenze des personenspezifischen Lidhubbereichs. Damit wird ein Bezug zu dem durch den Algorithmus vorgegebenen Lidhubbereich geschaffen.

In einem Aspekt entspricht der Grenzwert einem Wert, oberhalb dessen eine prozentuale Anzahl, beispielweise 1-10, insbesondere 5 Perzentile, der in den ersten Bildern ermittelten Lidstellungen liegt.

Die Erfinder habe herausgefunden, dass innerhalb der ersten Bilder, die eine natürliche Bandbreite des Blinzelverhaltens einer Person wiedergeben, die Lidstellung nicht zwangsläufig maximal innerhalb des personenspezifischen Lidhubbereichs sein muss. So können Lidstellungen mit geringeren Werten als der maximale Werte als offen gelten. Durch die Festlegung eines Grenzwerts können somit mehrere zweite Bilder ausgewählt werden, bei denen die Augen als geöffnet gelten. Damit kann die Anzahl an ausgewählten Bildern, welche die Anforderungen bezüglich einer Augenöffnung erfüllen, erhöht werden. Somit kann eine größere Anzahl von Bildern für die weitere Auswahl beispielsweise hinsichtlich der Entropie eines Bilds herangezogen werden. Damit wird die Wahrscheinlichkeit ein optimales Bild zur Authentifikation oder zur Verwendung in einem Sicherheitsdokument zu erhalten, welches gleichzeitig ein Bild mit geöffneten Augen zeigt, erhöht.

Während ihren Untersuchungen haben die Erfinder herausgefunden, dass für gewöhnlich Lidstellungen im den oberen 1 - 10, insbesondere 5 Perzentile der bestimmten Lidstellungen ausreichend sind, um als geöffnet zu gelten.

Falls mehrere zweite Bilder ausgewählt werden, kann das Verfahren ferner umfassen: Bestimmen für mindestens einen von mehreren Bildparametern eines Parameterwerts zu jedem der mehreren zweiten ausgewählten Bilder; und Auswählen aus den mehreren zweiten ausgewählten Bildern ein optimales zweites Bild, welches einen Parameterwert innerhalb eines für einen ausgewählten Parameter vorgegebenen Parameterbereichs liegt. Die Bildparameter können beispielsweise gebildet werden durch eine Helligkeit, eine Entropie und eine Schärfe.

Somit kann aus mehreren zweiten Bildern in denen jeweils mindestens eins, vorzugsweise beide, Augen als geöffnet bestimmt wurden ein optimales Gesichtsbild zur weiteren Verarbeitung ausgewählt werden. Bei der Anwendung zur Authentifizierung oder der Verwendung in einem Sicherheitsdokument haben sich zur Auswahl eines Bildes insbesondere die Beurteilung der Helligkeit, der Entropie und der Schärfe als aussagekräftig für die Qualität eines Bilds erwiesen.

In einem Aspekt umfasst das Verfahren das Erzeugen eines Bilddatensatzes zur Verwendung für ein Sicherheitsdokument oder zur Authentifizierung auf Basis des mindestens einen zweiten Bilds oder auf Basis des optimalen zweiten Bilds. Somit können die ein oder mehreren ausgewählten Bilder in Form eines Bilddatensatzes an eine weitere Entität übersandt werden.

Weiterhin kann ein Verfahren zum Personalisieren eines Sicherheitsdokuments geschaffen sein, wobei das Verfahren ferner umfasst: Übermitteln des Bilddatensatzes an eine Personalisierungseinrichtung, Drucken mittels der Personalisierungseinrichtung des Gesichtsbilds des Bilddatensatzes auf ein Sicherheitsdokument oder Speichern mittels der Personalisierungseinrichtung des Bilddatensatzes in einer Speichereinrichtung des Sicherheitsdokuments.

Weiterhin kann ein Verfahren zur Authentifizierung des Nutzers geschaffen sein, das Verfahren umfassend: Senden des Bilddatensatzes an einen Server über das Internet zur Authentifikation.

In weiteren Aspekten kann das Verfahren ferner umfassen: Ausgeben ein oder mehrere Signals an eine Bildaufnahmeeinrichtung, wie eine Kamera, zum Aufnehmen des ersten Videostreams und des zweiten Videostreams. Damit kann die Bildaufnahme zentral durch den Computer gesteuert werden.

Des Weiteren wird die Aufgabe gelöst durch eine Vorrichtung, insbesondere ein Prozessor, eingerichtet und ausgelegt, das erfindungsgemäße Verfahren durchzuführen. Die Vorrichtung kann beispielsweise ein Computer sein, der einen Prozessor umfasst.

Des Weiteren wird die Aufgabe gelöst durch ein Computerprogrammprodukt umfassend Befehle, die bei der Ausführung durch eine Datenverarbeitungsvorrichtung, insbesondere der genannten Vorrichtung, diese veranlassen, die Verfahrensschritte des erfindungsgemäße Verfahrens auszuführen.

Des Weiteren wird die Aufgabe gelöst durch ein System zum Bestimmen eines Bilds von dem Gesicht einer Person mit geöffneten Augen, das System umfassend: Die genannte Vorrichtung; Eine Bildaufnahmeeinrichtung, insbesondere eine Kamera, ausgelegt, ein oder mehrere Bilder von dem Gesicht der Person aufzunehmen, wobei die Vorrichtung eingerichtet ist, die Bildaufnahmeeinrichtung anzusteuern, sodass diese einen ersten Videostream mit Bildern von dem Gesicht der Person aufnimmt und darauffolgend einen zweiten Videostream von dem Gesicht der Person aufnimmt und den ersten und zweiten Videostream an die Vorrichtung sendet.

Durch ein solches System kann ein Life Enrolment System geschaffen sein, welches es einer Person ermöglicht sich eigenständig zu Authentifizieren oder ein Bild von deren Gesicht zur Verwendung in einem Sicherheitsdokument aufzunehmen.

In einem Aspekt kann die Vorrichtung eingerichtet sein, die Bildaufnahmeeinrichtung anzusteuern einen durchgehenden Videostream umfassend den ersten und den zweiten Videostream aufzunehmen. Damit kann eine besonders nutzerfreundliche Anwendung bereitgestellt werden.

### Beschreibung von Ausführungsbeispielen

Im Folgenden werden weitere Ausführungsbeispiele unter Bezugnahme auf Figuren einer Zeichnung näher erläutert. Hierbei zeigen beispielhaft:
- Fig. 1: Zeitliche Abfolge der Schritte eines Verfahrens zum Bestimmen eines Bilds von dem Gesicht einer Person mit geöffneten Augen
- Fig. 2: System zum Bestimmen eines Bilds von dem Gesicht einer Person mit geöffneten Augen
- Fig. 3: Eine Anordnung zur Personalisierung eines Sicherheitsdokuments oder zur Authentifizierung

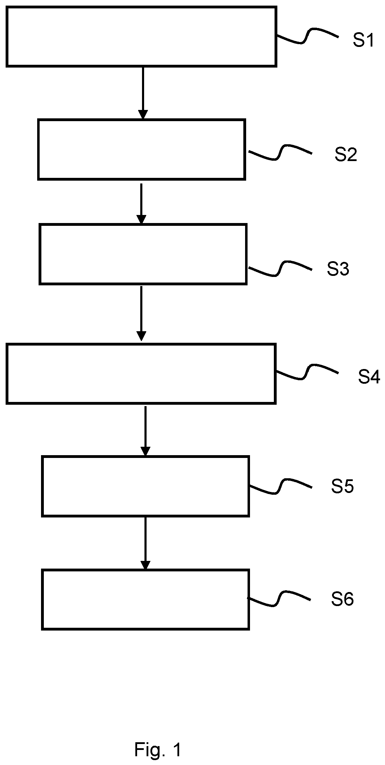

Figur 1 zeigt beispielhaft eine zeitliche Abfolge der Schritte eines Verfahrens zum Bestimmen eines Bilds von dem Gesicht einer Person 1 mit geöffneten Augen.

In Schritt S1 wird ein erster Videostream 4 mit mehreren ersten Bildern von dem Gesicht einer Person 1 an einem Computer 3 vorzugsweise von einer Bildaufnahmeeinrichtung 2 empfangen. In Schritt S2 werden für jedes der ersten Bilder die Augen des Gesichts in dem jeweiligen ersten Bild durch einen trainierten Algorithmus ermittelt und es wird für jedes Auge in dem jeweiligen ersten Bild eine Lidstellung in Form eines Werts innerhalb eines durch den trainierten Algorithmus vorgegebenen Lidhubbereichs durch den trainierten Algorithmus ermittelt. In Schritt S3 wird ein personenspezifischer Lidhubbereich in Bezug zu dem Lidhubbereich des trainierten Algorithmus anhand der für die ersten Bilder ermittelten Lidstellungen der Augen bestimmt.

In Schritt S4 wird durch den Computer 3 ein zweiter Videostream 5 mit mehreren zweiten Bildern von dem Gesicht der Person 1 vorzugsweise von der Bildaufnahmeeinrichtung 2 empfangen. Der zweite Videostream 5 wurde anschließend an den ersten Videostream 4 von dem Gesicht der Person 1 aufgenommen. In Schritt S5 werden für jedes der zweiten Bilder die Augen des Gesichts in dem jeweiligen zweiten Bild durch den trainierten Algorithmus ermittelt und es wird für jedes Auge eine Lidstellung in Form eines Werts innerhalb des durch den trainierten Algorithmus vorgegebenen Lidhubbereichs in dem jeweiligen zweiten Bild durch den trainierten Algorithmus ermittelt. In Schritt S6 wird mindestens ein zweites Bild ausgewählt, in dem mindestens ein Auge eine Lidstellung oberhalb eines Grenzwerts in dem personenspezifischen Lidhubbereich aufweist.

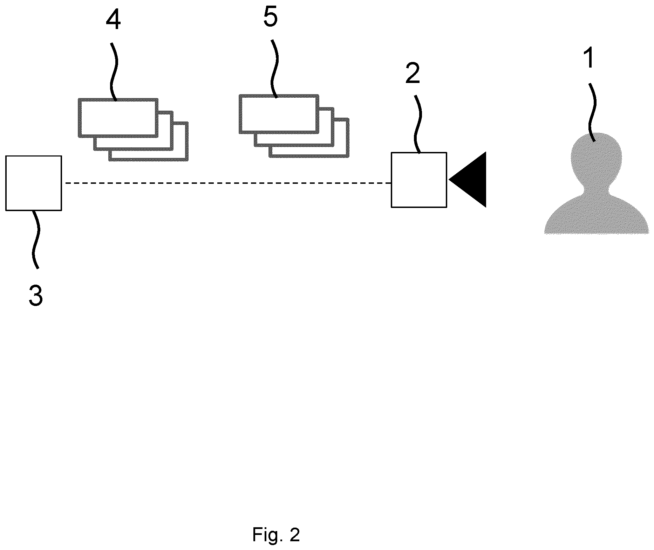

Figur 2 zeigt beispielhaft ein System zum Bestimmen eines Bilds von dem Gesicht einer Person 1 mit geöffneten Augen. Das System umfasst eine Bildaufnahmeeinrichtung 2, wie etwa eine Kamera, die ausgelegt ist, einen Videostream umfassend eine Vielzahl von an aufeinanderfolgenden Zeitpunkten aufgenommenen Bildern von dem Gesicht einer Person 1 aufzunehmen. Die Bildaufnahmeeinrichtung 2 ist mit einem Computer 3 verbunden und ausgelegt den aufgenommenen Videostream an den Computer 3 zu senden.

Die Bildaufnahmeeinrichtung 2 ist eingerichtet einen ersten Videostream 4 von dem Gesicht der Person 1 aufzunehmen und an den Computer 3 zu senden. Die Bildaufnahmeeinrichtung 2 ist ferner dazu eingerichtet, anschließend einen zweiten Videostream 5 aufzunehmen und an den Computer 3 zu senden. Der Computer 3 ist eingerichtet in einer zeitlichen Abfolge zuerst den ersten Videostream 4 zu empfangen und anschließend den zweiten Videostream 5 zu empfangen. Der Computer 3 ist ferner dazu eingerichtet das zuvor beschriebene Verfahren anhand des ersten Videoscreens 4 und des zweiten Videostreams 5 durchzuführen. Der erste Videostream 4 und der zweite Videostream 5 können Teile eines durchgehend aufgenommenen Videostreams sein, wobei sich der erste Videostream 4 in dem durchgehenden Videostream auf einer Zeitschiene vor dem zweiten Videostream 5 befindet. Darüber hinaus kann der Computer 3 eingerichtet sein, die Bildaufnahmeeinheit 2 so anzusteuern, dass diese den ersten Videostream 4 und den zweiten Videostream 5 von dem Gesicht der Person 1 aufnimmt.

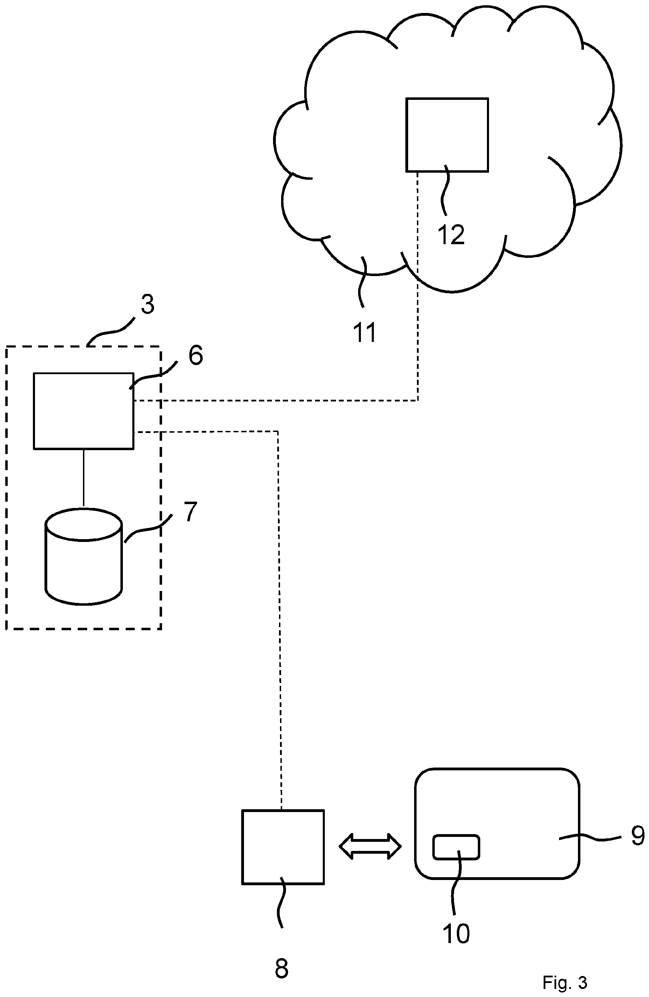

Die Fig. 3 zeigt eine schematische Darstellung einer Anordnung zum Personalisieren eines Sicherheitsdokuments 9 oder zur Authentifikation. Der Computer 3 kann beispielsweise einen Prozessor 6 umfassen. Mit Hilfe des Prozessors 6 kann ein Bilddatensatz auf Basis des mindestens einen ausgewählten Bilds erzeugt werden. Durch den Prozessor 10 kann der erhaltener Bilddatensatz in einem Speicher 7 zumindest vorübergehend abgelegt werden.

In einer Ausführungsform ist der Prozessor 6 mit einer Personalisierungseinrichtung 8 verbunden, an welche der Bilddatensatz wahlweise übertragen werden kann. Hierbei ist die Personalisierungseinrichtung 8 eingerichtet, ein Sicherheitsdokument 9 zu personalisieren. Hierzu kann die Personalisierungseinrichtung 8 mit einer Druckeinrichtung ausgeführt sein, mittels der ein biometrisches Passbild basierend auf dem Bilddatensatz auf dem Sicherheitsdokument 9 aufgedruckt wird. Alternativ oder ergänzend kann vorgesehen sein, den Bilddatensatz in einer Speichereinrichtung 10 des Sicherheitsdokuments 9 abzulegen. Hierdurch ist das Sicherheitsdokument 9 personalisiert und ermöglicht anhand des biometrischen Passbildes eine Personenidentifizierung.

Die Fig. 2 zeigt weiterhin eine alternative Ausführungsform in der alleine oder in Verbindung mit der Personalisierungseinrichtung 8 eine Verbindung durch den Prozessor 6 zum Internet 11 bereitgestellt ist. Über die Internetverbindung kann der Bilddatensatz zur weiteren Verwendung an einen Server 12 übermittelt werden. Beispielsweise kann der Server 12 Teil eines Netzwerks eines Diensteanbieters sein, welcher den Bilddatensatz für eine biometrische Identifizierung oder Authentifizierung des Nutzers als berechtigter Nutzer einer Dienstleistung verwendet, wobei entsprechende Verfahren zur Nutzung eines ein biometrisches Passbild angebenden Bilddatensatzes dem Fachmann in verschiedenen Ausgestaltungen prinzipiell bekannt sind.

Insbesondere in diesem Zusammenhang, aber auch in anderen Ausgestaltungen, kann der Prozessor 6 mit einem persönlichen elektronischen Gerät des Nutzers gebildet sein, beispielsweise einem Computer, einem Mobiltelefon, einem Tablet-Computer oder ähnlichem, auf dem zum Ausführen des Verfahrens eine entsprechende Softwareanwendung (App) läuft.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Person
- 2: Bildaufnahmeeinrichtung
- 3: Computer
- 4: erster Videostream
- 5: zweiter Videostream
- 6: Prozessor
- 7: Speicher
- 8: Personalisierungseinrichtung
- 9: Sicherheitsdokument
- 10: Speichereinrichtung
- 11: Internet
- 12: Server
- S1... S6: Verfahrensschritte

## Patentansprüche

1. Computer-implementiertes Verfahren zum Bestimmen eines Bilds von dem Gesicht einer Person (1) mit geöffneten Augen, umfassend
- Empfangen eines ersten Videostreams (4) mit mehreren ersten Bildern von dem Gesicht der Person (1);
- für jedes der ersten Bilder,
- Ermitteln der Augen des Gesichts in dem jeweiligen ersten Bild, und
- Ermitteln, für jedes Auge, einer Lidstellung in dem jeweiligen ersten Bild;
- Bestimmen eines personenspezifischen Lidhubbereichs anhand der für die ersten Bilder ermittelten Lidstellungen der Augen;
- Empfangen eines zweiten Videostreams (5) mit mehreren zweiten Bildern von dem Gesicht der Person (1);
- für jedes der zweiten Bilder,
- Ermitteln der Augen des Gesichts in dem jeweiligen zweiten Bild, und
- Ermitteln, für jedes Auge, einer Lidstellung in dem jeweiligen zweiten Bild; und
- Auswählen von mindestens einem zweiten Bild in dem mindestens ein Auge eine Lidstellung oberhalb eines Grenzwerts in dem personenspezifischen Lidhubbereich aufweist.

2. Verfahren nach Anspruch 1, **dadurch gekennzeichnet, dass** der erste Videostream (4) in einem Zeitinterwall vor dem zweiten Videostream (5) aufgenommen wurde.

3. Verfahren nach einem der vorangegangenen Ansprüche, **dadurch gekennzeichnet, dass** der erste Videostream (4) und der zweite Videostream (5) Segmente eines durchgehenden Videostreams sind und der erste Videostream (4) zeitlich vor dem zweiten Videostream in dem durchgehenden Videostreams (5) angeordnet ist.

4. Verfahren nach einem der vorangegangenen Ansprüche, **dadurch gekennzeichnet, dass** das Auswählen von mindestens einem zweiten Bild umfasst: Auswählen von mindestens einem zweiten Bild, bei dem beide Augen eine Lidstellung oberhalb des Grenzwerts in dem personenspezifischen Bereich aufweisen.

5. Verfahren nach einem der vorangegangenen Ansprüche, **dadurch gekennzeichnet, dass** das Ermitteln der Lidstellung mittels eines trainierten Algorithmus durchgeführt wird und die Lidstellung der Augen in den ersten Bildern ein Wert in Bezug eines durch den trainierten Algorithmus vorgegebenen Lidhubbereichs ist.

6. Verfahren nach einem der vorangegangenen Ansprüche, **dadurch gekennzeichnet, dass** ein minimaler Wert des personenspezifischen Lidhubbereichs ein Wert ist, der einer durch den trainierten Algorithmus bestimmten minimalen Lidstellung der Augen in den ersten Bildern entspricht und ein maximaler Wert des personenspezifischen Lidhubbereichs ein Wert ist, der einer durch den trainierten Algorithmus bestimmten maximalen Lidstellung der Augen in den ersten Bildern entspricht.

7. Verfahren nach einem der vorangegangenen Ansprüche, **dadurch gekennzeichnet, dass** der Grenzwert einem Wert entspricht oberhalb dessen eine prozentuale Anzahl, beispielweise 1-10 insbesondere 5 Perzentile, der in den ersten Bildern ermittelten Lidstellungen liegt.

8. Verfahren nach einem der vorangegangenen Ansprüche ferner umfassend:
- falls mehrere zweite Bilder ausgewählt werden,
- Bestimmen für mindestens einen von mehreren Bildparametern eines Parameterwerts zu jedem der mehreren zweiten ausgewählten Bilder; und
- Auswählen aus den mehreren zweiten ausgewählten Bildern ein optimales zweites Bild, welches einen Parameterwert innerhalb eines für einen ausgewählten Parameter vorgegebenen Parameterbereichs liegt.

9. Verfahren nach Anspruch 8, **dadurch gekennzeichnet, dass** die mehreren Bildparameter eine Helligkeit, eine Entropie und eine Schärfe umfassen.

10. Verfahren nach einem der vorangegangenen Ansprüche, **dadurch gekennzeichnet, dass** das Verfahren das Erzeugen eines Bilddatensatzes zur Verwendung für ein Sicherheitsdokument (9) auf Basis des mindestens einen zweiten Bilds oder auf Basis des optimalen zweiten Bilds umfasst.

11. Vorrichtung, insbesondere ein Computer (3), eingerichtet und ausgelegt, das Verfahren nach einem der Ansprüche 1 bis 10 durchzuführen.

12. Computerprogrammprodukt umfassend Befehle, die bei der Ausführung durch eine Datenverarbeitungsvorrichtung, insbesondere die Vorrichtung nach Anspruch 11, diese veranlassen, die Verfahrensschritte nach mindestens einem der Ansprüche 1 bis 10 auszuführen.

13. System zum Bestimmen eines Bilds von dem Gesicht einer Person (1) mit geöffneten Augen, das System umfassend:
- die Vorrichtung nach Anspruch 11;
- Eine Bildaufnahmeeinrichtung (2), insbesondere eine Kamera, ausgelegt, ein oder mehrere Bilder von dem Gesicht der Person (1) aufzunehmen,
- wobei die Vorrichtung eingerichtet ist, die Bildaufnahmeeinrichtung (2) anzusteuern, sodass diese einen ersten Videostream (4) mit Bildern von dem Gesicht der Person (1) aufnimmt und darauffolgend einen zweiten Videostream (5) von dem Gesicht der Person (1) aufnimmt und den ersten und zweiten Videostream (4, 5) an die Vorrichtung sendet.

14. System nach Anspruch 13, **dadurch gekennzeichnet, dass** die Vorrichtung eingerichtet ist, die Bildaufnahmeeinrichtung (2) anzusteuern einen durchgehenden Videostream umfassend den ersten und den zweiten Videostream (4, 5) aufzunehmen.
